# EUROPEAN PATENT APPLICATION

(11) **EP 3 699 651 A1**
(43) Date of publication of application: **26.08.2020**
(21) Application number: 18868281.9
(22) Date of filing: 16.10.2018
(51) Int. Cl.: G02B 5/20, B29C 45/00, B29C 48/00, B82Y 20/00, B82Y 40/00, H01L 33/50

(54) **RESIN MOULDED BODY, PRODUCTION METHOD THEREFOR, AND WAVELENGTH CONVERSION MEMBER**

(30) Priority: 17.10.2017 JP 2017201352
(71) Applicant: NS Materials Inc., Chikushino City, Fukuoka 818-0042 (JP)
(72) Inventor: IIDA, Kazunori, Chikushino-city Fukuoka 818-0042 (JP); TSUTSUMI, Emi, Chikushino-city Fukuoka 818-0042 (JP); TANAKA, Hidetoshi, Chikushino-city Fukuoka 818-0042 (JP)
(74) Representative: SSM Sandmair
(86) International application number: PCT/JP2018/038420
(87) International publication number: WO 2019/078183

(57) **Abstract**

To provide a resin molded product, a method for producing the same, and a wavelength conversion member that can suppress a decrease in the light conversion efficiency. The resin molded product of the present invention contains quantum dots and resin, the resin includes two or more components and is molded through extrusion molding or injection molding. In the present invention, the two or more components of the resin are preferably amorphous transparent resin that are incompatible. In the present invention, the quantum dots preferably include two or more types of quantum dots with different fluorescence wavelengths, and the respective types of quantum dots are dispersed in different resin phases.

## Description

### Technical Field

The present invention relates to a resin molded product, a method for producing the same, and a wavelength conversion member.

### Background Art

A quantum dot is a nanoparticle containing about several hundreds to several thousands of atoms and having a particle size on the order of several nm to several tens of nm. Quantum dots are also referred to as fluorescent nanoparticles, semiconductor nanoparticles, or nanocrystals.

The light emission wavelength of a quantum dot can be controlled in the visible to near-infrared regions depending on the particle size or composition of the nanoparticle. For example, quantum dots can be caused to emit green light or red light in the visible region. Thus, using a molded product containing quantum dots dispersed therein as a wavelength conversion member allows various colors of light to be exhibited. Patent Literature 1 describes a method for producing a film of resin containing quantum dots dispersed therein.

In Patent Literature 1, a method for producing a film through coating is disclosed that includes combining hydrophilic resin with hydrophobic resin and allowing the hydrophobic resin to contain quantum dots.

### Citation List

### Patent Literature

Patent Literature 1: JP 2016-536641 A

### Summary of Invention

### Technical Problem

However, in Patent Literature 1, since resin that should be used is limited to a combination of hydrophilic resin and hydrophobic resin, there are not so many combinations of resin that can be practically applied. In addition, considering a phenomenon that many of the quantum dots would deteriorate when exposed to moisture, the practically applicable range of the quantum dots is not so wide.

When quantum dots are used as wavelength conversion materials with the conventional techniques, it would be necessary to maintain the concentration of the quantum dots contained in resin high so as to allow for efficient wavelength conversion. However, if the concentration of the quantum dots is high, self-absorption (i.e., light emitted by a quantum dot is reabsorbed by another quantum dot) would occur. Thus, the higher the concentration, the lower the light conversion efficiency. Therefore, a method of maintaining the concentration of quantum dots low using a scattering agent in combination, for example, is typically used.

Nevertheless, if a scattering agent is used, the scattering agent would disperse non-uniformly or aggregate, which can result in non-uniform light conversion and thus is problematic. Further, if a large amount of scattering agent is used, the efficiency of extraction of converted light may decrease as the scattering agent may block the light.

Further, although Patent Literature 1 discloses an embodiment in which a plurality of types of quantum dots with different fluorescence wavelengths are contained, Patent Literature 1 fails to disclose a structure for improving the light conversion efficiency.

The present invention has been made in view of the foregoing. It is an object of the present invention to provide a resin molded product, a method for producing the same, and a wavelength conversion member that can suppress a decrease in the light conversion efficiency.

### Solution to Problem

A resin molded product of the present invention includes quantum dots and resin, in which the resin includes two or more components and is molded through extrusion molding or injection molding.

In the present invention, the two or more components of the resin are preferably amorphous transparent resin that are incompatible.

In the present invention, the quantum dots preferably include two or more types of quantum dots with different fluorescence wavelengths, and the respective types of quantum dots are preferably dispersed in different resin phases.

In the present invention, an additive is preferably dispersed in the resin phases containing the quantum dots.

A wavelength conversion member of the present invention is formed from the aforementioned resin molded product.

A method for producing a resin molded product of the present invention includes extrusion molding or injection molding two or more types of resin pellets, at least one of the two or more types of resin pellets containing quantum dots.

### Advantageous Effects of Invention

According to the resin molded product and the method for producing the same of the present invention, a resin molded product containing quantum dots with high light conversion efficiency can be provided.

In addition, a high-efficiency wavelength conversion member containing quantum dots can be produced using the resin molded product of the present invention.

In the present invention, a molded product is formed through extrusion molding or injection molding. Thus, production efficiency is high and the molded product is highly flexible in terms of resin that can be used, moldable shapes, and the like.

### Brief Description of Drawings

Fig. 1A is a schematic view of a quantum dot of the present embodiment.
Fig. 1B is a schematic view of a quantum dot of the present embodiment.
Fig. 2 is a flowchart illustrating a method for producing a resin molded product and a wavelength conversion member of the present embodiment.
Fig. 3 illustrates the spectrum of a resin film produced in Example 7.
Fig. 4 illustrates the spectrum of a resin film produced in Example 8.
Fig. 5 illustrates the spectrum of a resin film produced in Example 9.
Fig. 6 illustrates the spectrum of a resin film produced in Example 10.
Fig. 7 illustrates the spectrum of a resin film produced in Example 11.
Fig. 8 illustrates the spectrum of a resin film produced in Example 12.
Fig. 9 illustrates the spectrum of a resin film produced in Example 13.
Fig. 10 illustrates the spectrum of resin produced in Example 14.
Fig. 11 illustrates the spectrum of resin produced in Example 15.
Fig. 12 illustrates the spectrum of resin produced in Example 16.
Fig. 13 illustrates the spectrum of resin produced in Example 17.
Fig. 14 illustrates the spectrum of a resin film produced in Example 18.
Fig. 15 illustrates the spectrum of a resin film produced in Example 19.
Fig. 16 illustrates the comparison between the spectrum of the resin film of Example 7 and that of Example 18.
Fig. 17 illustrates the comparison between the spectrum of the resin film of Example 8 and that of Example 19.
Fig. 18 illustrates the comparison between the spectra of the resin films produced in Example 9, Example 10, Example 11, and Example 12.
Fig. 19 illustrates the spectrum of a resin film produced in Example 20.
Fig. 20 illustrates the spectrum of a resin film produced in Example 21.

### Description of Embodiments

Hereinafter, an embodiment of the present invention (hereinafter abbreviated to "embodiment") will be described in detail. It should be noted that the present invention is not limited to the following embodiment and can be implemented in various ways within the spirit and scope of the present invention.

A resin molded product containing quantum dots (hereinafter also abbreviated to "QDs") of the present embodiment is in the form or a film, sheet, block, or stick, for example, but the shape of the product is not particularly limited. It should be noted that a "film" as referred to herein is defined as a flexible sheet object. Meanwhile, a "sheet" as referred to herein is typically defined as the one having a thickness that is smaller than its length and width. In particular, the dimensions, such as the length L, width W, and thickness T, of a resin film or sheet containing quantum dots are not limited and are changed in various ways depending on the final product to be obtained. For example, such a resin film or sheet may be used for a back-light of a large product, such as a television, or a back-light of a small portable device, such as a smartphone. Therefore, the dimensions of the resin film or sheet are determined according to the final product to be obtained.

The resin molded product of the present embodiment is made of two or more transparent resin phases that are incompatible, and at least one of the phases contains quantum dots. Such a microphase-separated structure can be observed with an optical instrument, such as a microscope. The specific microphase-separated structure differs depending on the composition or molding conditions, for example.

The resin molded product of the present embodiment is formed through extrusion molding or injection molding.

In the resin molded product of the present embodiment, it is important that the two or more resin phases be microphase-separated, and at least one or each of the phases contain quantum dots dispersed therein. In principle, light conversion efficiency can be increased by the scattering of light at the interface of the microphase-separated transparent resin. Therefore, a light scattering agent is not an essential component and thus it is possible to fundamentally avoid problems such as aggregation of a light scattering agent and a decrease in the light extraction efficiency associated therewith. In the present embodiment, the specific microphase-separated structure is not limited.

Quantum dots will be described below. A quantum dot has fluorescence properties due to its band-edge luminescence, and exhibits the quantum size effect because of its particle size.

A quantum dot refers to a nanoparticle with a size of about several nm to several tens of nm. For example, a quantum dot contains CdS, CdSe, ZnS, ZnSe, ZnSeS, ZnTe, ZnTeS, InP, AgInS₂, or CuInS₂, or has a structure obtained by covering such a quantum dot as a core with a shell. The use of Cd is restricted because of its toxicity in some countries. Thus, quantum dots preferably do not contain Cd.

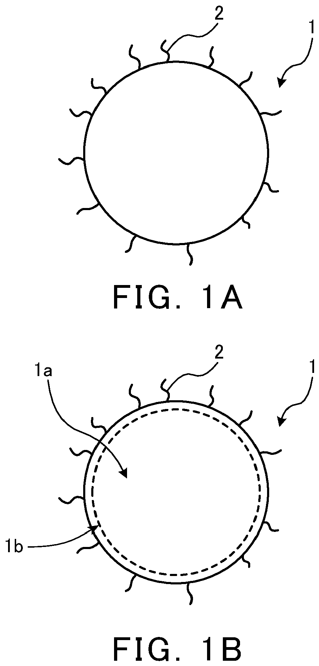

As illustrated in Fig. 1A, a quantum dot 1 preferably has a large number of organic ligands 2 coordinated to its surface. Accordingly, aggregation of quantum dots 1 can be suppressed and intended optical properties can be exhibited. Although ligands that can be used for reactions are not particularly limited, representative examples of ligands are as follows.
Primary aliphatic amines, such as oleylamine: C₁₈H₃₅NH₂, stearylamine (octadecylamine): C₁₈H₃₇NH₂, dodecylamine (laurylamine): C₁₂H₂₅NH₂, decylamine: C₁₀H₂₁NH₂, and octylamine: C₈H₁₇NH₂;
fatty acids, such as oleic acid: C₁₇H₃₃COOH, stearic acid: C₁₇H₃₅COOH, palmitic acid: C₁₅H₃₁COOH, myristic acid: C₁₃H₂₇COOH, lauric acid (dodecanoic acid): C₁₁H₂₃COOH, decanoic acid: C₉H₁₉COOH, and octanoic acid: C₇H₁₅COOH;
thiols, such as 1-octadecanethiol: C₁₈H₃₇SH, 1-hexadecanethiol: C₁₆H₃₃SH, 1-tetradecanethiol: C₁₄H₂₉SH, 1-dodecanethiol: C₁₂H₂₅SH, 1-decanethiol: C₁₀H₂₁SH, and 1-octanethiol: C₈H₁₇SH;
phosphines, such as tri-n-octylphosphine: (C₈H₁₇)₃P, triphenylphosphine: (C₆H₅)₃P, and tributylphosphine: (C₄H₉)₃P; and
phosphine oxides, such as trioctylphosphine oxide: (C₈H₁₇)₃P=O, triphenylphosphine oxide: (C₆H₅)₃P=O, and tributylphosphine oxide: (C₄H₉)₃P=O.

The quantum dot 1 illustrated in Fig. 1B is a core-shell structure including a core 1a and a shell 1b covering the surface of the core 1a. As illustrated in Fig. 1B, the surface of the quantum dot 1 preferably has a large number of organic ligands 2 coordinated thereto. The core 1a of the quantum dot 1 illustrated in Fig. 1B is the nanoparticle illustrated in Fig. 1A. Therefore, the core 1a is formed of the aforementioned material, for example. For example, the core 1a is formed of zinc sulfide (ZnS), though it does not question the material of the shell 1b. The shell 1b preferably does not contain cadmium (Cd) like the core 1a.

The shell 1b may be in the state of a solid solution supported on the surface of the core 1a. In Fig. 1B, the boundary between the core 1a and the shell 1b is indicated by the dotted line. This means that the boundary between the core 1a and the shell 1b may be or may not be confirmed through analysis.

The resin molded product of the present embodiment contains one or more types of quantum dots. That is, the product may contain one type of quantum dots. Meanwhile, regarding a resin molded product containing two or more types of quantum dots with different fluorescence wavelengths, the two or more types of quantum dots are preferably dispersed in different resin phases.

For example, in the present embodiment, quantum dots that exhibit green fluorescence and quantum dots that exhibit red fluorescence are dispersed in different resin phases, and the resin phases are incompatible. In this manner, since quantum dots with different fluorescence wavelengths are present in different resin phases, light is allowed to scatter at the interface between the resin phases. This can reduce a loss in the wavelength conversion, and thus can reduce the concentration of the quantum dots. Accordingly, the problem of self-absorption of the quantum dots, non-uniform dispersion of the quantum dots, the problem of aggregation, and the like can be avoided. This, in turn, can also avoid the problems of a red shift of the fluorescence wavelength and a decrease in the quantum yield (QY), for example.

Each of the two or more resin components of the present embodiment is preferably amorphous resin. Amorphous resin for forming the resin molded product is not particularly limited, but resin with a high degree of transparency is used. Further, semi-crystalline resin with high transparency can also be used. For example, polypropylene (PP), polyethylene (PE), cyclic olefin polymer (COP), cyclic olefin copolymer (COC), styrene resin (polystyrene: PS), acrylic resin, polycarbonate (PC), modified-polyphenyleneether, polyethyleneterephthalate (PET), polymethylpentene (PMP), or polyvinylidene fluoride (PVDF) can be used. Further, an elastomer with high transparency can also be used in combination with such resin.

The amorphous resin in which quantum dots are to be dispersed for forming the resin molded product is preferably acrylic resin, homopolymers (COP) or copolymers (COC) of cyclic olefin resin, or polyethyleneterephthalate (PET) in light of the dispersibility of the quantum dots in the resin and the fluorescence intensity after the dispersion.

In addition, the two resin components (amorphous resin) in which quantum dots are to be dispersed for forming the resin molded product desirably have a large difference in the refractive index of light. Therefore, preferably, one of the resin components is resin with a relatively low refractive index and the other is resin with a relatively high refractive index. Representative preferable examples include a combination of acrylic resin and cyclic olefin polymer, a combination of acrylic resin and polyethyleneterephthalate (PET) resin, and a combination of acrylic resin and polycarbonate (PC) resin.

Further, in the present embodiment, the resin phase containing the quantum dots may contain an additive, such as an antioxidant. An additive that can be used for the resin molded product is not particularly limited, but a lubricant or dispersing agent, such as a scattering agent, heat stabilizer, antioxidant, ultraviolet absorber, or metal soap, as well as glass or ceramic-based transparent fillers for reinforcement can be used.

Among them, examples of the antioxidant include a primary antioxidant, such as a phenolic antioxidant or hydroxylamine antioxidant, a secondary antioxidant, such as a phosphorus-based or sulfur-based antioxidant, and a combination of the primary antioxidant and the secondary antioxidant.

In the present embodiment, representative examples of the antioxidant include, but are not limited to, the following compounds.

Phenolic antioxidants, such as tetrakis[methylene-3-(3,5-di-*tert*-butyl-4-hydroxyphenyl)propionate]methane, 3,5-bis(1,1-dimethylethyl)-4-hydroxybenzenepropanoic acid thiodi-2,1-ethanediyl ester, 3-(3,5-di-*tert*-butyl-4-hydroxyphenyl)propionic acid stearyl ester, *N,N'*-Hexamethylenebis[3-(3,5-di-*tert*-butyl-4-hydroxyphenyl)propionamide], octyl-3,5-di-*tert*-butyl-4-hydroxyhydrocinnamate, 2,4,6-tris(3',5'-di-*tert*-butyl-4'-hydroxybenzyl)mesitylene, 2,4-bis(octylthiomethyl)-6-methylphenol, and tris(3,5-di-*tert*-butyl-4-hydroxybenzyl) isocyanurate;
amine antioxidants, such as diphenylamine, *P,P'*-dioctyldiphenylamine, 2,4-bis(octylthio)-6-(4-hydroxy-3,5-di-*tert*-butylanilino)-1,3,5-triazine, and *N-*phenyl-1,1,3,3-tetramethylbutylnaphthalen-1-amine;
phosphorus-based antioxidants, such as trioctyl phosphite, triisodecyl phosphite, trioctadecyl phosphite, triphenyl phosphite, tris(nonylphenyl) phosphite, tris(2,4-di-*tert*-butylphenyl) phosphite, and zinc dialkyldithiophosphate;
sulfur-based antioxidants, such as didodecyl 3,3'-thiodipropionate; and
other antioxidants, such as *N,N*-dioctadecylhydroxylamine and nickel dibutylcarbamate.

In the present embodiment, quantum dots with different fluorescence wavelengths are dispersed in different resin phases that are microphase-separated. Further, another resin phase not containing quantum dots dispersed therein may be used as a third phase. Adding such a resin phase not containing quantum dots dispersed therein as a third phase can add various functions.

That is, the third phase can be used to increase the light scattering effect or can be used as a micro barrier resin phase against permeation of water and oxygen. With the third phase, another function, such as increasing the scattering effect or protection against water and oxygen, can be added. In addition, the third phase may also contain fluorescent materials other than quantum dots, such as a fluorescent pigment or a fluorescence dye.

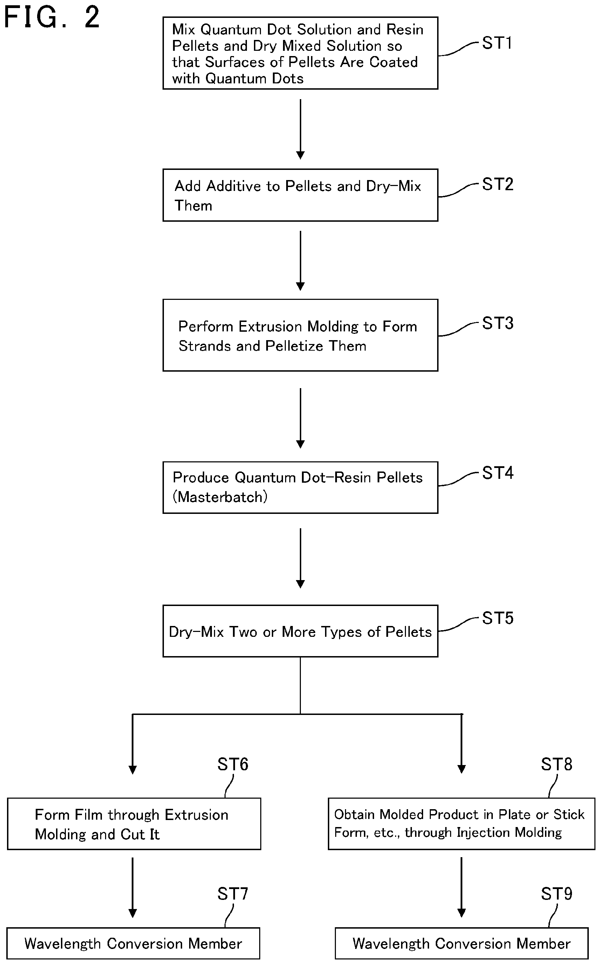

Fig. 2 is a flowchart illustrating a method for producing a resin molded product and a wavelength conversion member of the present embodiment.

In the method for producing a resin molded product of the present embodiment, resin pellets obtained by kneading quantum dots into resin are molded.

In step ST1 of Fig. 2, a quantum dot solution and resin pellets are mixed and the resulting mixed solution is dried. Accordingly, resin pellets with surfaces coated with the quantum dots are obtained.

As another method of coating the surface of a resin pellet raw material with quantum dots, a method of dry-mixing quantum dots in powder form and a resin pellet raw material is also considered. However, in view of the danger of the possible scattering of the powder and the like, a method of mixing a quantum dot dispersed solution and a resin pellet raw material and then removing the dispersion solvent through vaporization is preferably used for safety reasons.

As a solvent in which quantum dots are dispersed, toluene is usually used. However, in the method of the present embodiment, toluene is difficult to use directly as it will swell or dissolve many types of resin. Thus, hexane is preferably used as a solvent that is highly effective in dispersing quantum dots, has a low boiling point, and is easy to remove. However, if hexane used as a dispersion solvent would swell resin, alcohol is preferably used, for example. In such a case, an additive, such as a dispersing agent, should be used in combination with alcohol so that quantum dots can be adequately dispersed in the alcohol.

Next, in the present embodiment, an additive is added to the resin pellets, which are then dry-mixed (step ST2). Accordingly, the surfaces of the pellets can be coated with the additive.

It should be noted that the additive can be used within the range that it will not deteriorate the properties of the quantum dots, to improve the dispersibility of the quantum dots and prevent deterioration of the quantum dots when the quantum dots are kneaded into the resin in the next step ST3.

In the present embodiment, an additive, such as an antioxidant, can be added to minimize the deterioration of the quantum dots during kneading. It should be noted that an antioxidant, in particular, a phenolic antioxidant used as a primary antioxidant will deteriorate the quantum dots depending on the use environment. Thus, care should be taken for the use conditions or the amount of the antioxidant used. Specific exemplary materials of the antioxidant are described above.

In addition, a dispersing agent can be added to improve the dispersion of the quantum dots during kneading. A dispersing agent that is commonly used for dispersing a pigment, for example, can also be added to improve the dispersibility of the quantum dots as appropriate.

If an additive is not added, the process after step ST1 proceeds to step ST3.

After the pellets obtained by coating resin with the quantum dots are sufficiently dried, the pellets are kneaded with an extruder so that resin pellets containing the quantum dots dispersed therein can be obtained in the present embodiment (step ST3). As described above, since quantum dots are mechanically kneaded into resin with an extruder in the present embodiment, pretreatment for dispersing the quantum dots is not necessary. Thus, various types of quantum dots, such as Cd-based quantum dots, which contain Cd, and Cd-free quantum dots, which contain no Cd, can be adequately used.

The kneading can be performed with a single-screw extruder, but a twin-screw extruder is preferably used for the kneading so that the quantum dots can be uniformly dispersed in the resin.

When the quantum dots and the resin are kneaded with an extruder, the quantum dots may become deactivated due to heat. Thus, it is important that kneading be performed at the minimum resin temperature that allows for extraction. To prevent oxidative deterioration of the quantum dots, kneading is preferably performed under vacuum conditions with a reduced pressure or performed while purging is performed with an inert gas at the same time. Alternatively, to minimize the thermal history, the residence time of the quantum dots and the resin in the extruder during kneading is preferably minimized. Accordingly, deterioration of the quantum dots during mechanical melt kneading of the quantum dots and the resin can be minimized.

As described above, to minimize the deterioration of the quantum dots during kneading, an additive, such as an antioxidant, may be added.

In the present embodiment, resin pellets containing high-concentration quantum dots can be produced with the aforementioned method (step ST4).

It should be noted that the resin pellets containing the quantum dots are preferably dried once before they are used in the following step of producing a resin molded product. Herein, drying is ideally performed at a low temperature less than or equal to about 60 °C to prevent deterioration of the quantum dots while they are dried. In such a case, the resin pellets can be sufficiently dried under reduced pressure conditions, if available.

The thus produced resin pellets containing the quantum dots can be handled as a masterbatch like common pigment masterbatches. The necessary proportion of the masterbatch can be calculated from the concentration of the quantum dots in the masterbatch and the concentration that is needed for a final molded product to be obtained.

Next, a plurality of types of resin pellets are dry-mixed (step ST5). Herein, as the plurality of types of resin pellets, resin pellets containing a plurality of types of quantum dots, which have been prepared through the aforementioned steps ST1 to ST4; or resin pellets containing at least one type of quantum dots and resin pellets not containing quantum dots are preferably selected. When two or more types of resin pellets containing quantum dots are used, the respective types of quantum dots contained in the two or more types of resin pellets preferably have different fluorescence wavelengths. In addition, the respective types of resin pellets preferably contain different resin components.

Next, the plurality of types of resin pellets are loaded into a raw-material feeding port of a molding machine. Then, while the pellets are melted with an extruder, they are extruded through T-dies so that a resin film containing the quantum dots is obtained (step ST6).

Then, the resin film containing the quantum dots is formed into a desired wavelength conversion member (step ST7).

Alternatively, following step ST5, the plurality of types of resin pellets are injection molded with an injection molding machine (step ST8).

Then, the resin molded product containing the quantum dots is formed into a desired wavelength conversion member (step ST9).

The thus obtained resin molded product and wavelength conversion member can have a haze value that is controllable in the range greater than 0 % and less than or equal to 99 % depending on the proportions of the respective types of transparent resin combined. Preferably, the haze value is controllable in the range of 5 to 99 %.

In addition, in the present embodiment, the content of resin in the phase containing the quantum dots relative to the total mass is preferably in the range greater than 0 mass % and less than 100 mass %, or alternatively, in the range of 1 to 90 mass %, the range of 2 to 80 mass %, or the range of 5 to 50 mass %, though not particularly limited thereto.

In the present embodiment, a hazy resin molded product can be formed without a light scattering agent added thereto. Accordingly, there are advantages in that a decrease in the homogeneity of the product, which would otherwise occur due to aggregation of a light scattering agent, and deterioration in the appearance of the product can be avoided. Meanwhile, when a further higher scattering effect is desired, an inorganic scattering agent can be used, for example. The inorganic scattering agent can be directly kneaded in the form of powder into resin during extrusion molding. Alternatively, to disperse the scattering agent into a specific phase, resin into which the scattering agent has been kneaded in advance can be used as a raw material so that a scattering phase can be formed.

In the present embodiment, resin is mechanically kneaded through melt extrusion molding so that the resulting microphase-separated phases are used. Thus, the types of transparent resin that can be used as well as a combination thereof are not particularly limited. Therefore, quite a wide range of flexible material designs is possible.

In the present embodiment, the characteristics and advantages of the conventional resin molding techniques can be used. Thus, production efficiency is high and the molded product is highly flexible in terms of resin that can be used, moldable shapes, and the like. For example, when extrusion molding or injection molding is performed, high flexibility is provided depending on the size or shape of the dies used, and an intended molded product can be formed in a short time.

The two or more types of resin phases that are phase-separated of the present embodiment can be molded through typical resin molding, such as melt extrusion molding, or injection molding. Thus, the range of the moldable structures is wide. The resin phases can be molded into pellets when extrusion molding is used, and can be molded into a film when T-dies are used as the dies. Meanwhile, when injection molding is used, the resin phases can be molded into any given size or shape, such as a plate or a bar.

In addition, in the present embodiment, the degree of scattering of light can be controlled based on the combination of the types of amorphous resin used and the proportion of each resin component.

Resin that can be used in the present embodiment are amorphous resin that are incompatible and have different refractive indices. As there are many combinations of such resin, many choices are advantageously available for designing a product according to its intended use, considering the strength, rigidity, heat resistance, light resistance, or transparency, for example.

In addition, when a third amorphous resin component in which quantum dots are to be dispersed for forming a resin molded product is used, resin with a higher refractive index or resin with high barrier properties against oxygen and water, such as polyethylene terephthalate (PET) or polyvinyl alcohol (PVOH), is desirably used.

Further, when another performance is to be provided, such as when an additive for improving the heat resistance or stability is added, for example, such an additive can be kneaded into resin while the resin is molded. Alternatively, the aforementioned method of dispersing the necessary additive into only a specific phase as appropriate can be used.

In the present embodiment, transparent resin containing quantum dots can be molded into any given size and shape. In addition, the molding method used herein includes kneading and molding based on the conventional extrusion molding, or molding based on injection molding. Thus, continuous production is possible and thus resin molded products can be produced relatively inexpensively.

### [Examples]

Hereinafter, the advantageous effects of the present invention will be described by way of examples of the present invention. It should be noted that the embodiment of the present invention is not limited by the following examples by any means.

In the present experiment, the following materials were used to produce a resin molded product. It should be noted that each raw material was dried in a vacuum drying oven under the conditions of a reduced pressure and a temperature greater than or equal to 80 °C for 1 day or more before use.

Resin: cyclic olefin polymer (COP): ZEONOR (registered trademark) 1060R manufactured by Zeon Corporation.

Acrylic resin (PMMA): Optimas (registered trademark) 7500FS manufactured by MITSUBISHI GAS CHEMICAL COMPANY, INC.

Polyester resin (PET): ALTESTER (registered trademark) 4203F manufactured by MITSUBISHI GAS CHEMICAL COMPANY, INC.

Additives: stearic acid zinc (ZnSt) manufactured by Sigma-Aldrich, and zinc diethyldithiocarbamate (ZnDDTC) manufactured by Tokyo Chemical Industry Co., Ltd. (TCI)

In the present experiment, the following materials were used as the quantum dots (QDs). It should be noted that each type of the quantum dots (QDs) was used while being dispersed in a hexane (C₆H₁₂) solvent. In addition, the concentration of the quantum dots was optically determined through quantitative determination of the absorbance using an ultraviolet-visible spectrophotometer (UV-Vis Spectrophotometer) V-770 manufactured by JASCO Corporation.

### [Quantum dots (QDs)]

Cd-based quantum dots (QDs): green-light emitting quantum dots (G-QDs) and red-light emitting quantum dots (R-QDs) each having a core/shell structure.

### [Extruder]

Extruder for producing pellets
Manufacturer: TECHNOVEL CORPORATION
Specifications: A twin-screw extruder with a screw diameter of 25 mm
L/D: 40
Maximum kneading temperature: 400 °C

### [Film molding machine]

Extruder for producing a film
Manufacturer: TECHNOVEL CORPORATION
Specifications: A twin-screw extruder with a screw diameter of 15 mm
L/D: 40
Maximum kneading temperature: 400 °C

### [Injection molding machine]

Manufacturer: NIIGATA MACHINE TECHNO Co., Ltd.
Specifications: a screw diameter of 25 mm
L/D: 40
Maximum injection temperature: 400 °C

### [Optical measuring device]

Spectroradiometer
Manufacturer: TOPCON TECHNOHOUSE CORPORATION, SR3-AR and SR3A

### [Optical measuring device]

Spectro haze meter
Manufacturer: NIPPON DENSHOKU INDUSTRIES CO., LTD., SH-7000

### [Optical measuring device]

Microscope
Manufacturer: KEYENCE CORPORATION, VHX-5000

### [Example 1]

2 kg of acrylic resin was mixed with 30 mL of a Cd-based G-QD-dispersed hexane solution (the concentration of which was determined from the optical absorbance, and the necessary amount of the solution was calculated from the determined concentration) so that the dispersed solution was applied to the entire pellets. Then, the hexane solution was evaporated to obtain resin pellets with surfaces coated with the QDs. Then, ZnSt (6.0 g: 0.3 wt%) was added to the resin pellets, and the pellets and the powder were dry-mixed so that the surfaces of the pellets were coated with ZnSt.

The thus obtained pellets were kneaded with a twin-screw extruder at a molding temperature of 200 to 230 °C, and the obtained strands were cut with a pelletizer so that acrylic resin pellets containing the QDs dispersed therein were obtained.

The obtained acrylic resin pellets containing the G-QDs were dried in a vacuum drying oven at 60 °C for 24 hours or more, and the resulting pellets were used as an acrylic resin masterbatch containing the Cd-based G-QDs in the next step.

### [Example 2]

2 kg of acrylic resin was mixed with 25 mL of a Cd-based R-QD-dispersed hexane solution so that the dispersed solution was applied to the entire pellets. Then, the hexane solution was evaporated to obtain acrylic resin pellets with surfaces coated with the QDs.

Then, ZnSt (4.0 g: 0.2 wt%) was added to the resin pellets, and the pellets and the powder were dry-mixed so that the surfaces of the pellets were coated with ZnSt.

The thus obtained pellets were kneaded with a twin-screw extruder at a molding temperature of 200 to 230 °C, and the obtained strands were cut with a pelletizer. Thus, acrylic resin pellets containing the QDs dispersed therein were obtained.

The obtained acrylic resin pellets containing the R-QDs were dried in a vacuum drying oven at 60 °C for 24 hours or more, and the resulting pellets were used as an acrylic resin masterbatch containing the Cd-based R-QDs in the next step.

### [Example 3]

2 kg of COP was mixed with 30 mL of a Cd-based G-QD-dispersed hexane solution, and the hexane solution was evaporated quickly so that COP resin pellets with surfaces coated with the QDs were obtained.

Then, ZnSt (6.0 g: 0.3 wt%) was added to the resin pellets, and the pellets and the powder were dry-mixed so that the surfaces of the pellets were coated with ZnSt.

The thus obtained pellets were kneaded with a twin-screw extruder at a molding temperature of 200 to 220 °C, and the obtained strands were cut with a pelletizer. Thus, COP resin pellets containing the QDs dispersed therein were obtained.

The obtained COP resin pellets containing the G-QDs were dried in a vacuum drying oven at 60 °C for 24 hours or more, and the resulting pellets were used as a COP resin masterbatch containing the Cd-based G-QDs in the next step.

### [Example 4]

2 kg of COP was mixed with 25 mL of a Cd-based R-QD-dispersed hexane solution, and the hexane solution was evaporated quickly so that COP resin pellets with surfaces coated with the QDs were obtained.

Then, ZnSt (4.0 g: 0.2 wt%) was added to the resin pellets, and the pellets and the powder were dry-mixed so that the surfaces of the pellets were coated with ZnSt.

The thus obtained pellets were kneaded with a twin-screw extruder at a molding temperature of 200 to 220 °C, and the obtained strands were cut with a pelletizer. Thus, COP resin pellets containing the QDs dispersed therein were obtained.

The obtained COP resin pellets containing the R-QDs were dried in a vacuum drying oven at 60 °C for 24 hours or more, and the resulting pellets were used as a COP resin masterbatch containing the Cd-based R-QDs in the next step.

### [Example 5]

2 kg of PET resin was mixed with 30 mL of Cd-based G-QD-dispersed hexane solution, and the hexane solution was evaporated quickly so that PET resin pellets with surfaces coated with the QDs were obtained.

Then, ZnSt (6.0 g: 0.3 wt%) was added to the resin pellets, and the pellets and the powder were dry-mixed so that the surfaces of the pellets were coated with ZnSt.

The thus obtained pellets were kneaded with a twin-screw extruder at a molding temperature of 220 to 230 °C, and the obtained strands were cut with a pelletizer. Thus, PET resin pellets containing the QDs dispersed therein were obtained.

The obtained PET resin pellets containing the G-QDs were dried in a vacuum drying oven at 60 °C for 24 hours or more, and the resulting pellets were used as a PET resin masterbatch containing the Cd-based G-QDs in the next step.

### [Example 6]

2 kg of PET resin was mixed with 25 mL of a Cd-based R-QD-dispersed hexane solution, and the hexane solution was evaporated quickly so that PET resin pellets with surfaces coated with the QDs were obtained. Then, ZnSt (4.0 g: 0.2 wt%) was added to the resin pellets, and the pellets and the powder were dry-mixed so that the surfaces of the PET pellets were coated with ZnSt.

The thus obtained pellets were loaded into a raw-material feeding port of a twin-screw extruder so as to be kneaded at a temperature of 220 to 230 °C, and the obtained strands were cut with a pelletizer. Thus, PET resin pellets containing the QDs dispersed therein were obtained.

The obtained PET resin pellets containing the R-QDs were dried in a vacuum drying oven, and the resulting pellets were used as a PET resin masterbatch containing the Cd-based R-QDs in the next step.

Table 1 below collectively illustrates Example 1 to Example 6. It should be noted that the QD concentration is the value calculated from the correlation between the optically determined absorbance and the weight (wt%) of the QDs determined through thermogravimetric analysis (TGA).

**[Table 1]**

| Example | Resin | QDs | Additive (wt%) | QD Concentration (wt%) |
|---|---|---|---|---|
| 1 | Acrylic | Cd-based G-QDs | ZnSt (0.3) | 0.82 |
| 2 | Acrylic | Cd-based R-QDs | ZnSt (0.2) | 0.40 |
| 3 | COP | Cd-based G-QDs | ZnSt (0.3) | 0.82 |
| 4 | COP | Cd-based R-QDs | ZnSt (0.2) | 0.40 |
| 5 | PET | Cd-based G-QDs | ZnSt (0.3) | 0.82 |
| 6 | PET | Cd-based R-QDs | ZnSt (0.2) | 0.40 |

### [Example 7]

200 g of the acrylic resin masterbatch containing G-QDs produced in Example 1 and 300 g of a COP resin pellet raw material were mixed under dry conditions. Then, the obtained mixture of the two types of resin was melted with a twin-screw extruder at a molding temperature of 200 to 220 °C and was then extruded through T-dies so that a hazy, opaque film was obtained.

A film with a thickness of 111 µm was molded by controlling the extrusion speed and the winding speed. The obtained film was wound up on a roller and was cut into the necessary size. Then, the spectrum of the film was measured with a haze meter and a spectroradiometer.

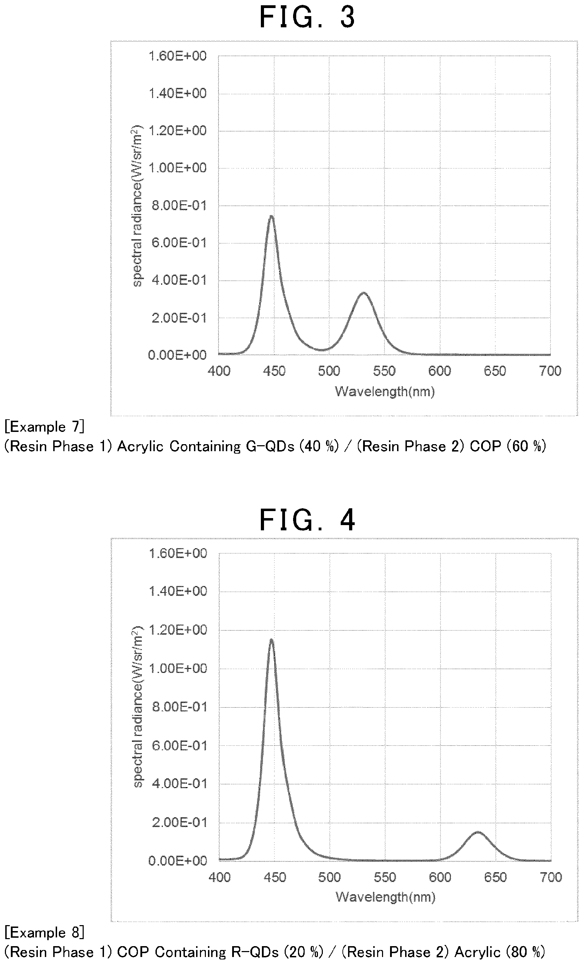

The total light transmittance of the obtained film was 95.4 % and the haze was 91.2 %. Fig. 3 illustrates the spectrum measurement results.

### [Example 8]

200 g of the COP resin masterbatch containing R-QDs produced in Example 4 and 800 g of an acrylic resin pellet raw material were mixed under dry conditions. Then, the obtained mixture of the two types of resin was melted with a twin-screw extruder at a molding temperature of 200 to 220 °C and was then extruded through T-dies so that a hazy, opaque film was obtained.

A film with a thickness of 133 µm was molded by controlling the extrusion speed and the winding speed. The obtained film was wound up on a roller and was cut into the necessary size. Then, the spectrum of the film was measured with a haze meter and a spectroradiometer.

The total light transmittance of the obtained film was 85.2% and the haze was 49.1 %. Fig. 4 illustrates the spectrum measurement results.

### [Example 9]

50 g of the acrylic resin masterbatch containing G-QDs produced in Example 1 and 950 g of a COP resin pellet raw material were mixed under dry conditions. Then, the obtained mixture of the two types of resin was melted with a twin-screw extruder at a molding temperature of 200 to 220 °C and was then extruded through T-dies so that a hazy, opaque film was obtained.

A film with a thickness of 152 µm was molded by controlling the extrusion speed and the winding speed. The obtained film was wound up on a roller and was cut into the necessary size. Then, the spectrum of the film was measured with a haze meter and a spectroradiometer.

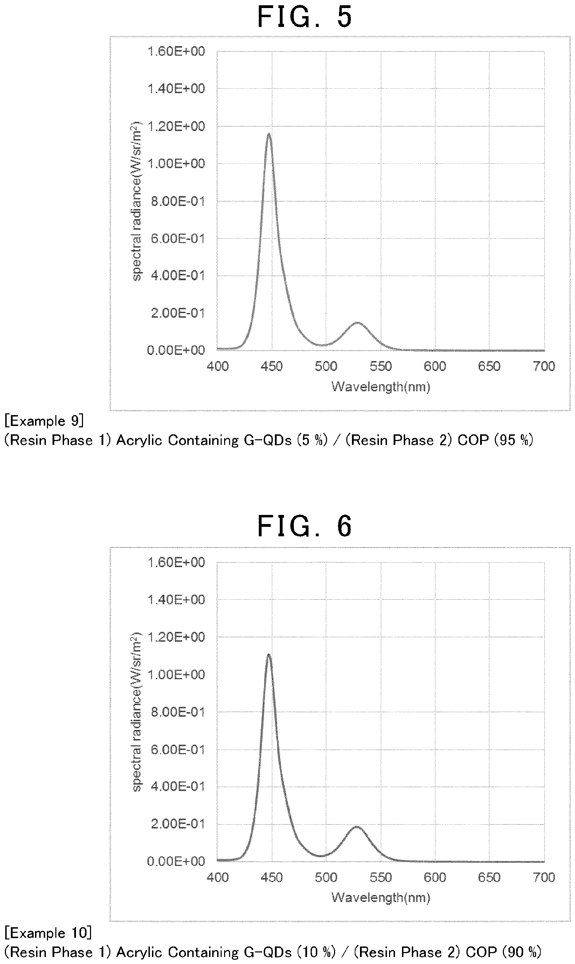

The total light transmittance of the obtained film was 91.1 % and the haze was 12.1 %. Fig. 5 illustrates the spectrum measurement results.

### [Example 10]

100 g of the acrylic resin masterbatch containing G-QDs produced in Example 1 and 900 g of a COP resin pellet raw material were mixed under dry conditions. Then, the obtained mixture of the two types of resin was melted with a twin-screw extruder at a molding temperature of 200 to 220 °C and was then extruded through T-dies so that a hazy, opaque film was obtained.

A film with a thickness of 156 µm was molded by controlling the extrusion speed and the winding speed. The obtained film was wound up on a roller and was cut into the necessary size. Then, the spectrum of the film was measured with a haze meter and a spectroradiometer.

The total light transmittance of the obtained film was 88.6 % and the haze was 31.7 %. Fig. 6 illustrates the spectrum measurement results.

### [Example 11]

150 g of the acrylic resin masterbatch containing G-QDs produced in Example 1, 150 g of an acrylic resin pellet raw material, and 1200 g of a COP resin pellet raw material were mixed under dry conditions. Then, the obtained mixture of the three types of resin was melted with a twin-screw extruder at a molding temperature of 200 to 220 °C and was then extruded through T-dies so that a hazy, opaque film was obtained.

A film with a thickness of 171 µm was molded by controlling the extrusion speed and the winding speed. The obtained film was wound up on a roller and was cut into the necessary size. Then, the spectrum of the film was measured with a haze meter and a spectroradiometer.

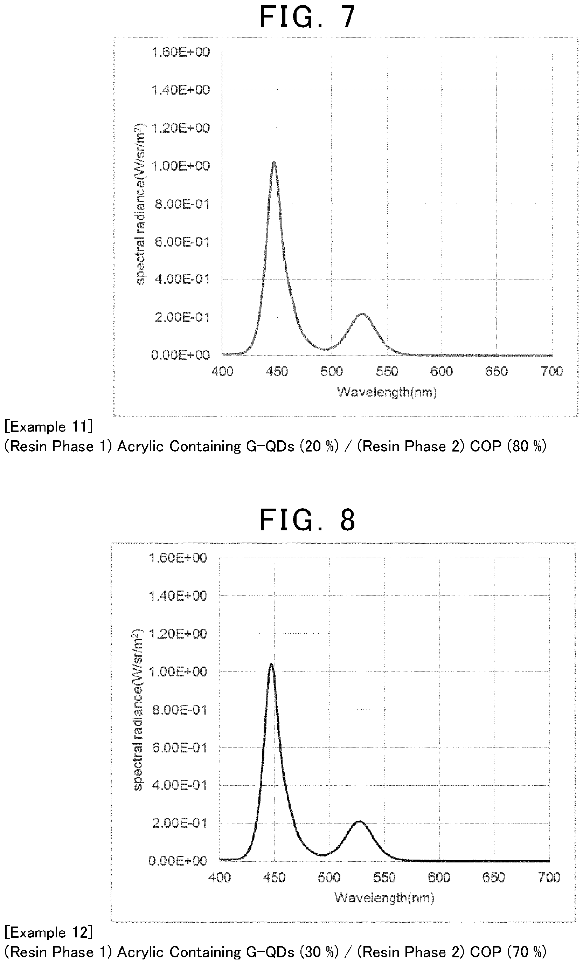

The total light transmittance of the obtained film was 88.7 % and the haze was 59.4 %. Fig. 7 illustrates the spectrum measurement results.

### [Example 12]

150 g of the acrylic resin masterbatch containing G-QDs produced in Example 1, 300g of an acrylic resin pellet raw material, and 1050 g of a COP resin pellet raw material were mixed under dry conditions. Then, the obtained mixture of the three types of resin was melted with a twin-screw extruder at a molding temperature of 200 to 220 °C and was then extruded through T-dies so that a hazy, opaque film was obtained.

A film with a thickness of 169 µm was molded by controlling the extrusion speed and the winding speed. The obtained film was wound up on a roller and was cut into the necessary size. Then, the spectrum of the film was measured with a haze meter and a spectroradiometer.

The total light transmittance of the obtained film was 88.1 % and the haze was 78.2 %. Fig. 8 illustrates the spectrum measurement results.

### [Example 13]

22.5 g of the acrylic resin masterbatch containing G-QDs produced in Example 1, 15 g of the COP resin masterbatch containing R-QDs produced in Example 4, 37.5 g of an acrylic resin pellet raw material, and 225 g of a COP resin pellet raw material were mixed under dry conditions. Then, the obtained mixture of the four types of resin was melted with a twin-screw extruder at a molding temperature of 200 to 220 °C and was then extruded through T-dies so that a hazy, opaque film was obtained.

A film with a thickness of 52 µm was molded by controlling the extrusion speed and the winding speed. The obtained film was wound up on a roller and was cut into the necessary size. Then, the spectrum of the film was measured with a haze meter and a spectroradiometer.

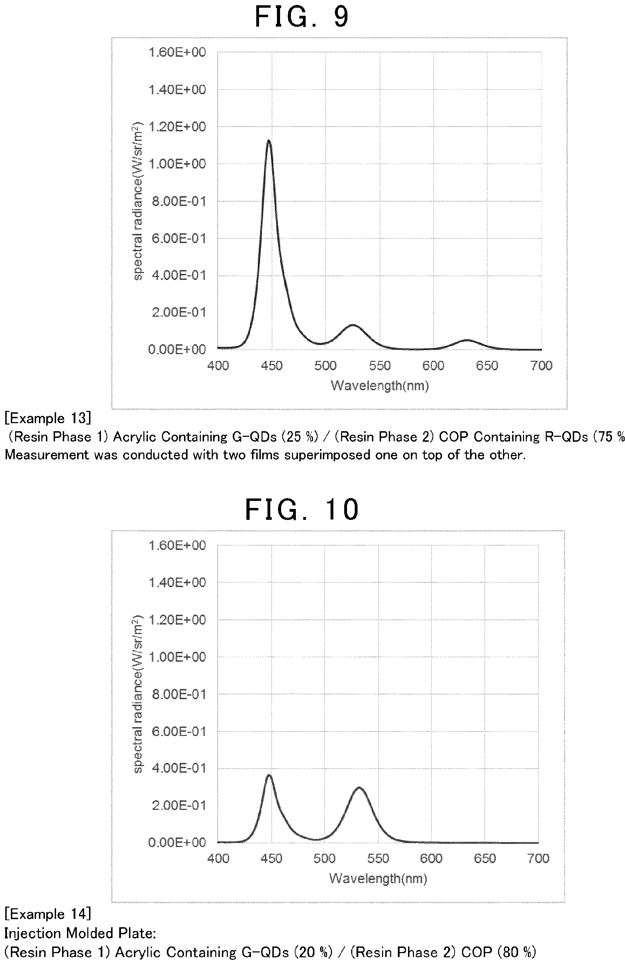

The total light transmittance of the obtained film was 91.6 % and the haze was 83.9 %. Fig. 9 illustrates the spectrum measurement results.

### [Example 14]

50 g of the acrylic resin masterbatch containing G-QDs produced in Example 1, 50 g of an acrylic resin pellet raw material, and 400 g of a COP resin pellet raw material were mixed under dry conditions. Then, the obtained mixture of the three types of resin was injection molded with an injection molding machine at a molding temperature of 200 to 240 °C so that a hazy, opaque plate with a thickness of 1 mm was obtained.

The optical properties, including the spectrum of the obtained plate was measured with a haze meter and a spectroradiometer. The total light transmittance of the obtained plate was 73.6 % and the haze was 96.3 %. Fig. 10 illustrates the spectrum measurement results.

### [Example 15]

5 g of the acrylic resin masterbatch containing G-QDs produced in Example 1, 45 g of an acrylic resin pellet raw material, and 450 g of a COP resin pellet raw material were mixed under dry conditions. Then, the obtained mixture of the three types of resin was injection molded with an injection molding machine at a molding temperature of 200 to 240 °C so that a hazy, opaque plate with a thickness of 1 mm was obtained.

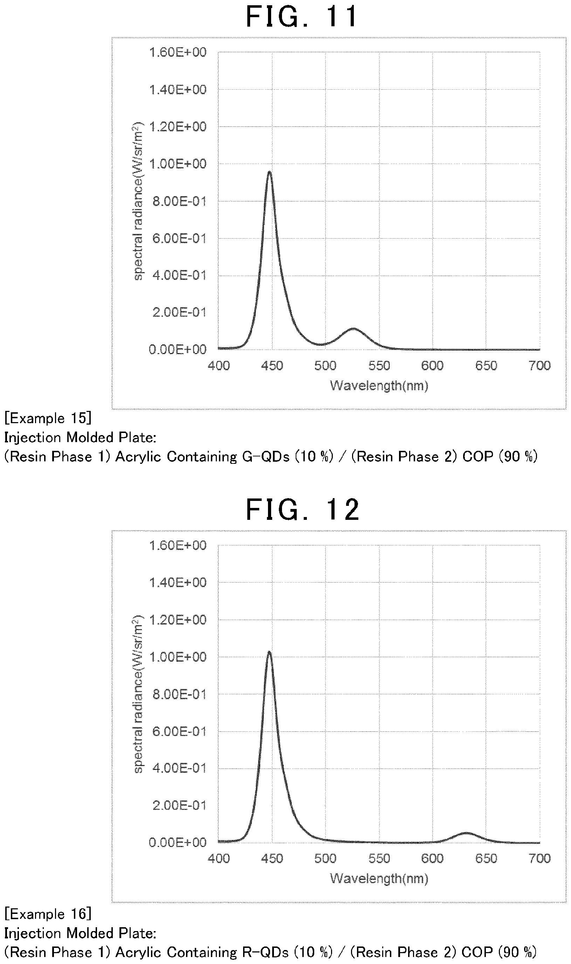

The optical properties, including the spectrum of the obtained plate was measured with a haze meter and a spectroradiometer. The total light transmittance of the obtained plate was 73.2 % and the haze was 78.1 %. Fig. 11 illustrates the spectrum measurement results.

### [Example 16]

6 g of the acrylic resin masterbatch containing R-QDs produced in Example 2, 24 g of an acrylic resin pellet raw material, and 270 g of a COP resin pellet raw material were mixed under dry conditions. Then, the obtained mixture of the three types of resin was injection molded with an injection molding machine at a molding temperature of 200 to 240 °C so that a hazy, opaque plate with a thickness of 1 mm was obtained.

The optical properties, including the spectrum of the obtained plate was measured with a haze meter and a spectroradiometer.

The total light transmittance of the obtained plate was 69.1 % and the haze was 83.0 %. Fig. 12 illustrates the spectrum measurement results.

### [Example 17]

15 g of the acrylic resin masterbatch containing G-QDs produced in Example 1, 30 g of the PET resin masterbatch containing R-QDs produced in Example 6, and 255 g of a COP resin pellet raw material were mixed under dry conditions. Then, the obtained mixture of the three types of resin was injection molded with an injection molding machine at a molding temperature of 200 to 240 °C so that a hazy, opaque plate with a thickness of 1 mm was obtained.

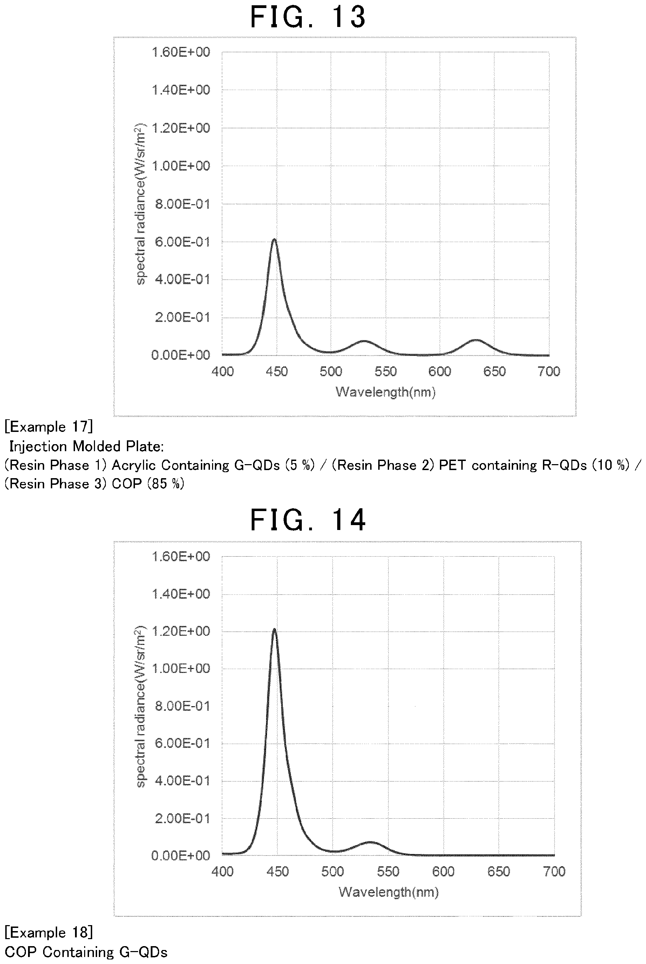

The optical properties, including the spectrum of the obtained plate was measured with a haze meter and a spectroradiometer. The total light transmittance of the obtained plate was 81.9 % and the haze was 39.2 %. Fig. 13 illustrates the spectrum measurement results.

### [Example 18]

400 g of the COP resin masterbatch containing G-QDs produced in Example 3, 100 g of a COP resin pellet raw material, and 0.5 g of stearic acid zinc (ZnSt) were mixed under dry conditions. Then, the obtained mixture of the three types of resin was melted with a twin-screw extruder at a molding temperature of 200 to 220 °C and was then extruded through T-dies so that a transparent film containing the G-QDs was obtained.

A film with a thickness of 133 µm was molded by controlling the extrusion speed and the winding speed. The obtained film was wound up on a roller and was cut into the necessary size. Then, the spectrum of the film was measured with a haze meter and a spectroradiometer.

The total light transmittance of the obtained film was 92.0 % and the haze was 2.6 %. Fig. 14 illustrates the spectrum measurement results.

### [Example 19]

100 g of the COP resin masterbatch containing R-QDs produced in Example 4, 400 g of a COP resin pellet raw material, and 0.5 g of stearic acid zinc (ZnSt) were mixed under dry conditions. Then, the obtained mixture of the three types of resin was melted with a twin-screw extruder at a molding temperature of 200 to 220 °C and was then extruded through T-dies so that a transparent film containing the R-QDs was obtained.

A film with a thickness of 153 µm was molded by controlling the extrusion speed and the winding speed. The obtained film was wound up on a roller and was cut into the necessary size. Then, the spectrum of the film was measured with a haze meter and a spectroradiometer.

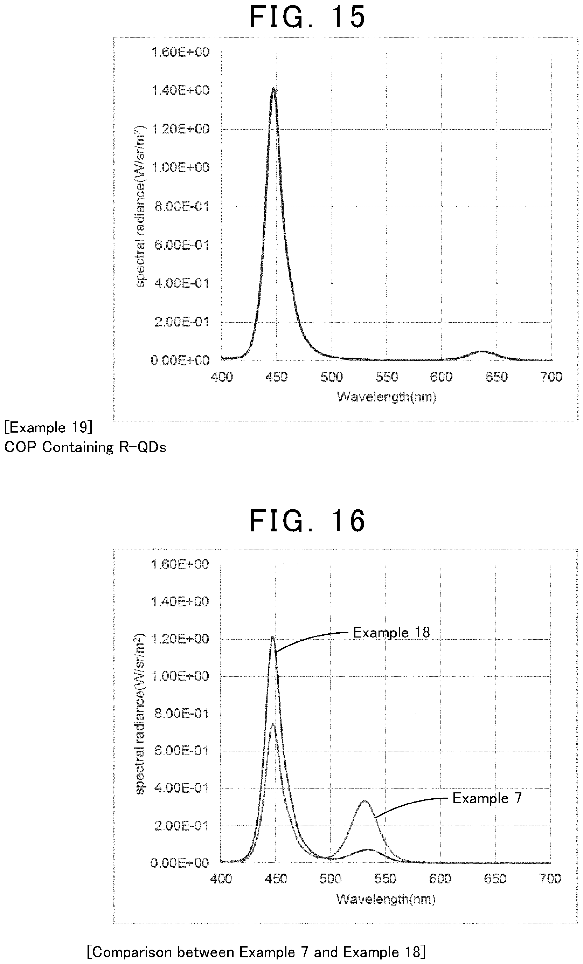

The total light transmittance of the obtained film was 91.0 % and the haze was 1.4 %. Fig. 15 illustrates the spectrum measurement results.

### [Example 20]

15 g of styrene (organic) resin and 25 g of BaSO₄ (inorganic) were added as scattering agents to 35 g of the acrylic resin masterbatch containing G-QDs produced in Example 1, 75 g of a highly transparent elastomer pellet raw material, and 250 g of an acrylic resin pellet raw material, which were then mixed under dry conditions. Then, the obtained mixture of the three types of resin and the scattering agents was melted with a twin-screw extruder at a molding temperature of 170 to 200 °C and was then extruded through T-dies so that a hazy, opaque film was obtained.

A film with a thickness of 150 µm was molded by controlling the extrusion speed and the winding speed. The obtained film was wound up on a roller and was cut into the necessary size. Then, the spectrum of the film was measured with a haze meter and a spectroradiometer.

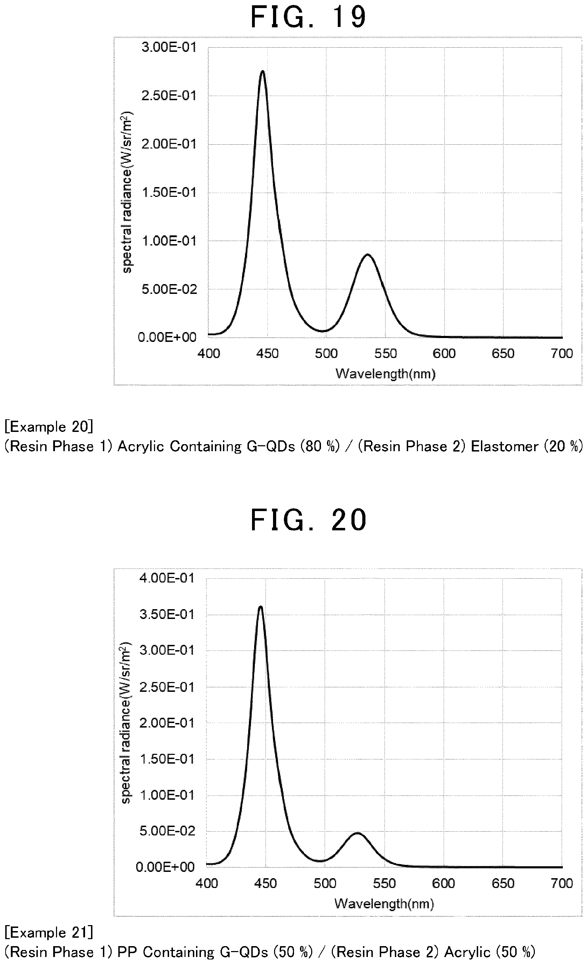

The total light transmittance of the obtained film was 87.3 % and the haze was 94.9 %. Fig. 19 illustrates the spectrum measurement results.

### [Example 21]

2 kg of polypropylene resin was mixed with 60 mL of Cd-based G-QD-dispersed hexane solution (the concentration of which was determined from the optical absorbance, and the necessary amount of the solution was calculated from the determined concentration) so that the dispersed solution was applied to the entire pellets. Then, the hexane solution was evaporated to obtain resin pellets with surfaces coated with the QDs.

Then, ZnSt (2.0 g: 0.1 wt%) and Zn (DDTC) (2.0 g: 0.1 wt%) were added to the resin pellets, and the pellets and the powder were dry-mixed so that the surfaces of the pellets were coated with ZnSt and Zn (DDTC).

The thus obtained pellets were kneaded with a twin-screw extruder at a molding temperature of 170 to 200 °C, and the obtained strands were cut with a pelletizer. Thus, polypropylene resin pellets containing the QDs dispersed therein were obtained.

The obtained polypropylene resin pellets containing the G-QDs were dried in a vacuum drying oven at 60 °C for 24 hours or more, and the resulting pellets were used as a polypropylene resin masterbatch containing the Cd-based G-QDs in the next step.

35 g of the polypropylene resin masterbatch containing G-QDs, 215 g of a polypropylene resin pellet raw material, and 250 g of an acrylic resin pellet raw material were mixed under dry conditions. Then, the obtained mixture of the three types of resin was melted with a twin-screw extruder at a molding temperature of 170 to 200 °C and was then extruded through T-dies so that a hazy, opaque film was obtained.

A film with a thickness of 150 µm was molded by controlling the extrusion speed and the winding speed. The obtained film was wound up on a roller and was cut into the necessary size. Then, the spectrum of the film was measured with a haze meter and a spectroradiometer.

The total light transmittance of the obtained film was 91.7 % and the haze was 62.5 %. Fig. 20 illustrates the spectrum measurement results.

### [Example 22]

50 g of the PET resin masterbatch containing G-QDs produced in Example 5, 200 g of a PET resin pellet raw material, 225 g of an acrylic resin pellet raw material, and 25 g of an elastomer resin pellet raw material were mixed under dry conditions. Then, the obtained mixture of the three types of resin including PET resin, acrylic resin, and elastomer resin was injection molded with an injection molding machine at a molding temperature of up to 250 °C so that a hazy, opaque plate with a thickness of 1 mm was obtained. It should be noted that the elastomer raw material used in Example 22 was DYNARON (registered trademark) 4660P manufactured by JSR Corporation.

The optical properties, including the spectrum of the obtained plate was measured with a haze meter and a spectroradiometer. The total light transmittance of the obtained plate was 51.2 % and the haze was 97.8 %.

Table 2 (the results of production of multi-component-phase-separated films containing QDs) below collectively illustrates Example 7 to Example 22. It should be noted that the QD concentration is the value calculated from the correlation between the optically determined absorbance and the weight (wt%) of the QDs determined through thermogravimetric analysis (TGA). The total thickness is the actual measurement value measured with a micrometer.

**[Table 2]**

| Example | Resin Phase 1 (wt%) QD (wt%) | Resin Phase 2 (wt%) QD (wt%) | Resin Phase 3 (wt%) Additive (wt%) | Total Thickness (µ m) | Total Light Transmittance (%) /Haze (%) |
|---|---|---|---|---|---|
| 7 | Acrylic 40 G-QD 0.33 | COP 60 | Not Used | 111 | 95.4 /91.2 |
| 8 | COP 20 R-QD 0.02 | Acrylic 80 | Not Used | 133 | 85.2 /49.1 |
| 9 | Acrylic 5 G-QD 0.08 | COP 95 | Not Used | 152 | 91.1 /12.1 |
| 10 | Acrylic 10 G-QD 0.08 | COP 90 | Not Used | 156 | 88.6 /31.7 |
| 11 | Acrylic 20 G-QD 0.08 | COP 80 | Not Used | 171 | 88.7 /59.4 |
| 12 | Acrylic 30 G-QD 0.08 | COP 70 | Not Used | 169 | 88.1 /78.2 |
| 13 | Acrylic 25 G-QD 0.06 | COP 75 R-QD 0.01 | Not Used | 52 | 91.6 /83.9 |
| 14 | Acrylic 20 G-QD 0.08 | COP 80 | Not Used | 1.0 (mm) | 73.6 /96.3 |
| 15 | Acrylic 10 G-QD 0.008 | COP 90 | Not Used | 1.0 (mm) | 73.2 /78.1 |
| 16 | Acrylic 10 R-QD 0.004 | COP 90 | Not Used | 1.0 (mm) | 69.1 /83.0 |
| 17 | Acrylic 5 G-QD 0.04 | PET 10 G-QD 0.02 | COP 85 | 1.0 (mm) | 81.9 /39.2 |
| 18 | COP 100 G-QD 0.33 | Not Used | Not Used ZnSt 0.5 | 133 | 92.0 /2.6 |
| 19 | COP 100 R-QD 0.02 | Not Used | Not Used ZnSt 0.5 | 153 | 91.0 /1.4 |
| 20 | Acrylic 80 G-QD 0.06 | Elastomer 20 | Not Used Styrene-based Scattering Agent 3.75 BaSO₄ 6.25 | 150 | 87.3 /94.9 |
| 21 | PP 50 G-QD 0.06 | Acrylic 50 | Not Used | 150 | 91.7 /62.5 |
| 22 | PET 50 G-QD 0.08 | Acrylic 45 | Elastomer 5 | 1.0 (mm) | 51.2 /97.8 |

Herein, "QD (wt%)" illustrated in Table 2 is the value calculated from the correlation between the optically determined concentration and the weight (wt%) of the QDs determined through thermogravimetric analysis (TGA). In addition, the "total thickness" illustrated in Table 2 is the actual measurement value measured with a micrometer.

Each of Example 1 to Example 6 relates to a method of producing a resin masterbatch containing QDs uniformly dispersed therein. Transparent resin was used as a raw material, and Cd-based G-QDs or Cd-based R-QDs were kneaded into the resin. Thus, a QD-containing resin masterbatch based on acrylic resin, COP, or PET resin was obtained.

Example 7 relates to a two-component-based film containing G-QDs, and Example 8 relates to a two-component-based film containing R-QDs. As COP resin and acrylic resin are incompatible, microphase separation occurred in the film. Thus, light scattered at the interface of the microphase-separated resin. Therefore, such film was found to be hazy, and highly efficient light conversion was possible with the film without a scattering agent added thereto.

The spectra of Example 7 and Example 8 on back light are illustrated in Fig. 3 and Fig. 4, respectively. Correspondingly, in Example 18 and Example 19, films containing 100 % COP resin in which G-QDs and R-QDs are dispersed, respectively, were produced. Such films were found to be highly transparent but not hazy without a scattering agent added thereto. Thus, the light conversion efficiency of the films was found to be not high.

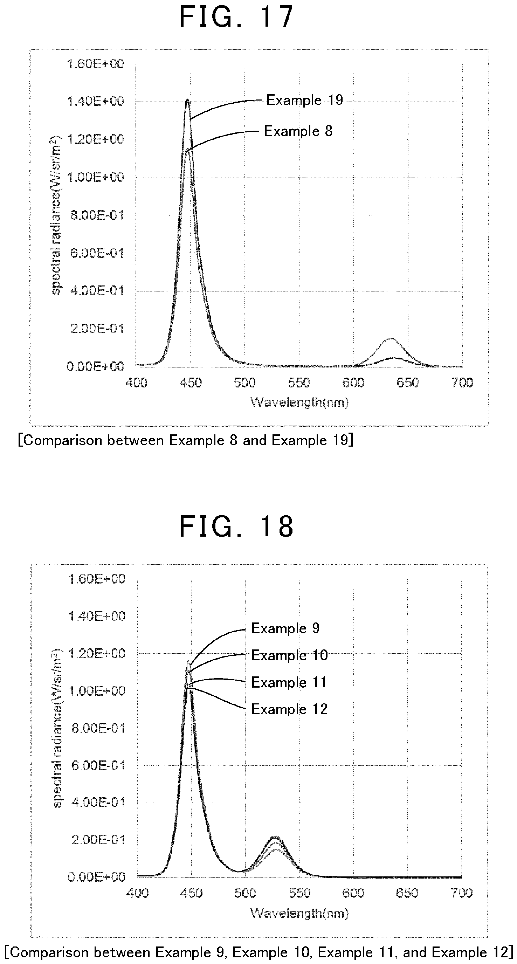

Fig. 16 illustrates the comparison between the spectrum of the two-component-based film produced in Example 7 and the spectrum of the single-component-based film produced in Example 18. Likewise, Fig. 17 illustrates the comparison between the spectrum of the two-component-based film produced in Example 8 and the spectrum of the single-component-based film produced in Example 19. The experimental results illustrated in Fig. 16 and Fig. 17 verified that the light conversion efficiency of the two-component-based film is much higher than that of the single-component-based film.

In Example 9 to Example 12, the proportions of the two types of base resin were gradually changed to adjust the haze value. Regarding the two-component-based film containing COP and acrylic resin, it was found that as the proportion of acrylic was increased to 5 %, 10 %, 20 %, and 30 % while COP resin was used as the base resin, the transparency was maintained at the same level but the haze value increased to 12.1 %, 31.7 %, 59.4 %, and 78.2 %, respectively. Thus, such examples verified that changing the proportions of two types of resin that are incompatible in various ways can control the haze value.

Fig. 18 illustrates the comparison between the spectra of the films produced in Example 9 to Example 12. It was verified that the higher the haze, the higher the conversion efficiency for excitation light.

Example 13 relates to a two-component-based film in which G-QDs and R-QDs are contained in different phases. The film contains low-concentration R-QDs and has a thickness as thin as 52 µm, but when two such films were superimposed one on top of the other and the spectrum was analyzed, the green fluorescence peak and the red fluorescence peak were clearly observed.

In each of Example 14 to Example 17, a plate with a thickness of 1 mm was produced through injection molding using an acrylic resin masterbatch containing G-QDs or R-QDs, and COP resin. As the thickness of each plate was thick, the haze of each of the plates of Example 14 to Example 16 was found to be as high as about 80 % or more. In addition, each plate was found to convert excitation light efficiently on back light, and green or red fluorescence emission corresponding to the G-QDs or R-QDs was observed from the spectrum.

In Example 20, a two-component-based film was produced using an acrylic masterbatch containing G-QDs and elastomer resin. The haze of the film was as high as about 90 % or more, and the film was found to convert excitation light efficiently on back light, and also, green fluorescence emission corresponding to the G-QDs was observed from the spectrum. Further, using both acrylic resin and elastomer resin not only made the resulting film hazy but significantly improved the brittleness, which is a drawback of an acrylic resin film, and thus significantly improved the handling of the film.

In Example 21, a two-component-based film was produced using a PP masterbatch containing G-QDs and acrylic resin. A film with a low haze of about 60 % but with a significantly high light transmittance of 90 % or more was obtained.

Accordingly, the above examples verified that a film or plate containing QDs dispersed therein can be produced with high flexibility using the conventional extrusion molding or injection molding, and such a film or plate has quite high light conversion efficiency.

### Industrial Applicability

According to the present invention, a resin molded product that contains quantum dots with excellent light conversion efficiency can be advantageously used as a wavelength conversion member.

The present application is based on Japanese Patent Application No. 2017-201352 filed on October 17, 2017, which is incorporated herein by reference in its entirety.

## Claims

1. A resin molded product comprising quantum dots and resin,
wherein:
the resin includes two or more components, and
the resin is molded through extrusion molding or injection molding.

2. The resin molded product according to claim 1, wherein the two or more components of the resin are amorphous transparent resin that are incompatible.

3. The resin molded product according to claim 1 or 2,
wherein:
the quantum dots include two or more types of quantum dots with different fluorescence wavelengths, and
the respective types of quantum dots are dispersed in different resin phases.

4. The resin molded product according to claim 3, further comprising an additive dispersed in the resin phases containing the quantum dots.

5. A wavelength conversion member that is formed from the resin molded product according to any one of claims 1 to 4.

6. A method for producing a resin molded product, comprising extrusion molding or injection molding two or more types of resin pellets, at least one of the two or more types of resin pellets containing quantum dots.
